# EUROPÄISCHE PATENTSCHRIFT

(11) **EP 0 966 361 B1**
(45) Veröffentlichungstag und Bekanntmachung des Hinweises auf die Patenterteilung: **30.05.2001**
(21) Anmeldenummer: 98913696.5
(22) Anmeldetag: 11.03.1998
(51) Int. Cl.: B60K 7/00

(54) **ANTRIEBSANORDNUNG, INSBESONDERE FÜR OMNIBUSSE**
DRIVE MECHANISM, ESPECIALLY FOR BUSES
DISPOSITIF D'ENTRAINEMENT, EN PARTICULIER POUR AUTOBUS

(30) Priorität: 12.03.1997 DE 19710094
(43) Veröffentlichungstag der Anmeldung: 29.12.1999
(73) Patentinhaber: ZF FRIEDRICHSHAFEN Aktiengesellschaft, 88038 Friedrichshafen (DE)
(72) Erfinder: ROSKE, Michael, D-88046 Friedrichshafen (DE)
(86) Internationale Anmeldenummer: EP9801383
(87) Internationale Veröffentlichungsnummer: WO9840235

(56) Entgegenhaltungen:
- EP-A- 0 509 221
- EP-A- 0 582 563
- DE-A- 19 617 165
- DE-U- 29 518 402
- FR-A- 2 049 684
- US-A- 4 554 989
- US-A- 5 127 485
- US-A- 5 283 493

## Beschreibung

Die Erfindung betrifft ein elektrisch angetriebenes Fahrzeug mit Einzelradantrieb nach dem Oberbegriff des Anspruchs 1.

Bei Omnibussen werden an die Raumgestaltung besondere Anforderungen gestellt. Dies gilt insbesondere für Omnibusse, die im städtischen Nahverkehr eingesetzt werden. Die Anforderungen, die an die Raumgestaltung bei Niederflurbussen gestellt werden, lassen sich insbesondere wie folgt zusammenfassen:

Die Abmessungen der Radkästen sollen klein sein, damit ein durchgehend breiter Laufgang vorgesehen werden kann. Die Flurhöhe, d. h. der Boden des Laufgangs, soll niedrig liegen, damit der Einstieg erleichtert wird. Nach Möglichkeit soll der Laufgang in einer Ebene liegen; insbesondere ist eine Steigung des Laufgangs im rückwärtigen Bereich des Fahrzeugs unerwünscht. Im Heck des Niederflurbusses soll ein großer Stehbereich vorhanden sein. Der Ein- und Ausstieg muß sowohl im vorderen Bereich als auch im rückwärtigen Bereich des Fahrzeugs möglich sein. Zusätzlich muß eine Tür im Bereich zwischen der Vorder- und Hinterachse vorhanden sein.

Die Raumgestaltung bei Omnibussen hängt auch von der Anordnung des Triebwerks ab. Um den Omnibus vielseitig und wirtschaftlich einsetzen zu können, sind Hybrid-Antriebe bekanntgeworden. Bei Trolley-Bussen findet neben einem Dieselmotor ein Elektromotor Verwendung. Es ist ferner bekanntgeworden, zwei Dieselmotoren einzusetzen. Der zweite Motor wird erforderlichenfalls, z. B. bei Steigungen, zugeschaltet.

Der elektrische Einzelradantrieb bietet gegenüber der konventionellen Antriebstechnik mit Verbrennungsmotor und Getriebe eine Reihe von Vorteilen in niederflurigen Fahrzeugen. Bei einem Einzelradantrieb über Elektromotoren entfällt, gegenüber der Antriebsvariante mit einem zentralen E-Motor z. B., das mechanische Differential, da diese Funktion elektronisch dargestellt wird.
Bei gesetzlich vorgeschriebener Fahrzeugbreite ergibt sich bei den heute am Markt befindlichen elektrischen Einzelradantrieben, die für Zwillingsbereifung üblicherweise als Radnabenantrieb in Verbindung mit einer Starrachse und einer aus Längs- und Dreieckslenkern bestehenden Achsaufhängung ausgeführt sind, ein lichtes Maß zwischen den Antriebseinheiten, das laut Forderung der Fahrzeughersteller eine nicht ausreichende verfügbare Nutzbreite zuläßt.

Dies führte zu der Forderung nach kompakteren Radnabenantrieben.

Kompakte Radnabenantriebe sind aber sehr kostenintensive Komponenten und haben gegenüber andersartigen Einzelradantrieben eine ganze Reihe von Nachteilen.

Heute verfügbare Serienmotoren können aus Bauraumgründen im Radnabenantrieb nicht verwendet werden. Bauraumoptimierte Motoren sind sehr hochtourige Sondermaschinen, die hochübersetzende Getriebe erfordern, um Motordrehzahl und - drehmoment auf die erforderlichen Werte am Rad anzupassen. Solange die Motoren koaxial zur Raddrehachse angeordnet sind, trägt ihre Masse sehr stark zur Erhöhung der dynamischen Massenkräfte resultierend aus den ungefederten Massen des gesamten Achssystems bei.

Die erforderlichen Komponenten Motor, Getriebe, Bremse, Radlagerung und Felgenbefestigung können nur unter extremem Entwicklungsaufwand so stark komprimiert werden, daß die Forderung der Fahrzeughersteller nach maximaler Nutzbreite zwischen den Antrieben erfüllt werden kann.

Der Erfindung liegt die Aufgabe zugrunde, eine Antriebsanordnung für ein Kraftfahrzeug, insbesondere einen Omnibus, zu schaffen, die die Verwirklichung einer großflächigen Niederflurfläche ermöglicht. Die Antriebsanordnung soll insbesondere den Anforderungen an die Raumgestaltung bei Niederflurbussen gerecht werden.

Die Erfindung löst die gestellte Aufgabe dadurch, daß der jeweils einem Rad zugeordneten Einzelradantrieb in Fahrtrichtung vor oder hinter dem Antriebsrad angeordnet ist und mit dem Antriebsrad über eine Stirnräderkette verbunden ist, wobei das Gehäuse der stirnräderkette als ein Verbundlenker ein Teil der Aufhängung der das Antriebsrad tragenden Achse bildet.

In einer vorteilhaften Ausgestaltung kann der Einzelradantrieb am Verbundlenker befestigt sein.

In einer weiteren vorteilhaften Ausgestaltung ist der Einzelradantrieb zur Reduzierung dynamischer Massenkräfte in unmittelbarer Nähe des Lenkerkopfes des Verbundlenkers zwischen Lenkerkopf und Antriebsrad angeordnet.

Eine weitere vorteilhafte Ausgestaltung zeigt die Anordnung des Einzelradantriebes am Verbundlenker einer Einzelradaufhängung. Dabei können die Einzelradantriebe mehrerer Antriebsräder an einer Fahrzeugachse unabhängig voneinander angefedert werden.

In einer anderen vorteilhaften Ausgestaltung ist die Bremsbetätigung zur Vergrößerung der nutzbaren Breite zwischen den Antriebsrädern außerhalb des Umfanges des Antriebsrades angeordnet. Über einen zwischen Bremsbetätigung und Bremse 13 vorgesehenen Hebel wird die Bremse 13 betätigt.

In einer weiteren vorteilhaften Ausgestaltung ist der Einzelradantrieb aus mehreren kleineren Elektromotoren gebildet, die über ein Summenrad auf das Stirnradgetriebe einwirken.

Vorzugsweise ist der Einzelradantrieb luft-, wasser-oder ölgekühlt.

Eine weitere vorteilhafte Ausgestaltung zeigt ein Planetengetriebe, über das das Stirnradgetriebe auf das Antriebsrad einwirkt.

Die Erfindung wird anhand von Figuren näher erläutert. Es zeigen:
- Fig. 1: eine Anordnung eines Einzelradantriebs nach Stand der Technik in Draufsicht;
- Fig. 2: eine Anordnung eines Einzelradantriebes nach Stand der Technik in Seitenansicht;
- Fig. 3: eine Anordnung eines Einzelradantriebes nach Stand der Technik im Schnitt;
- Fig. 4: die erfindungsgemäße Anordnung eines Einzelradantriebes mit Starrachse in Draufsicht;
- Fig. 5: die erfindungsgemäße Anordnung eines Einzelradantriebes mit Starrachse in Seitenansicht;
- Fig. 6: die erfindungsgemäße Anordnung eines Einzelradantriebes mit Starrachse im Schnitt;
- Fig. 7: die erfindungsgemäße Anordnung eines Einzelradantriebes mit Einzelradaufhängung in Draufsicht;
- Fig. 8: die erfindungsgemäße Anordnung eines Einzelradantriebes mit Einzelradaufhängung in Seitenansicht und
- Fig. 9: die erfindungsgemäße Anordnung eines Einzelradantriebes mit Einzelradaufhängung im Teil-Schnitt.

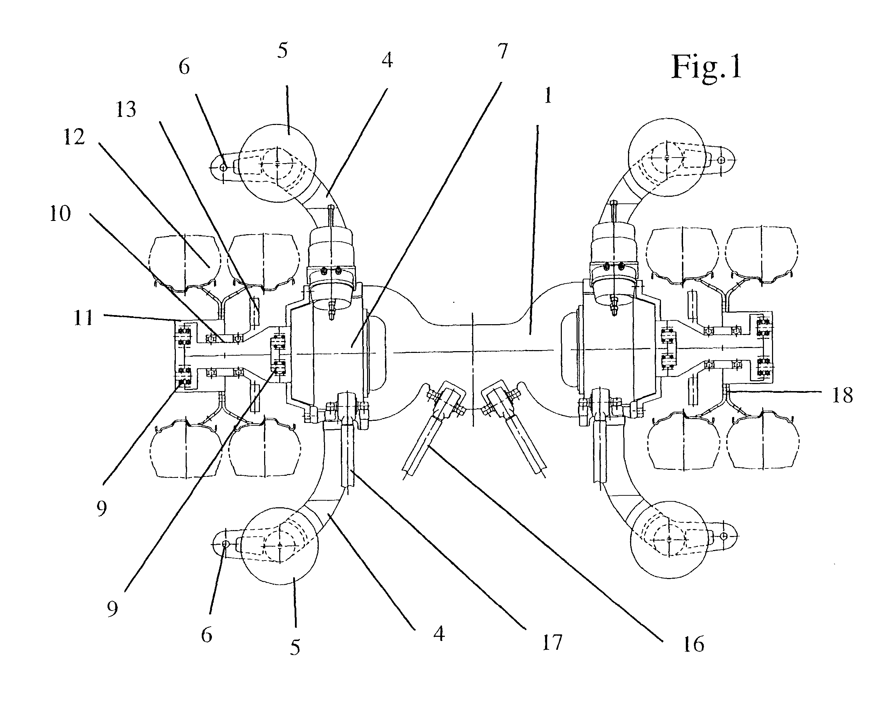

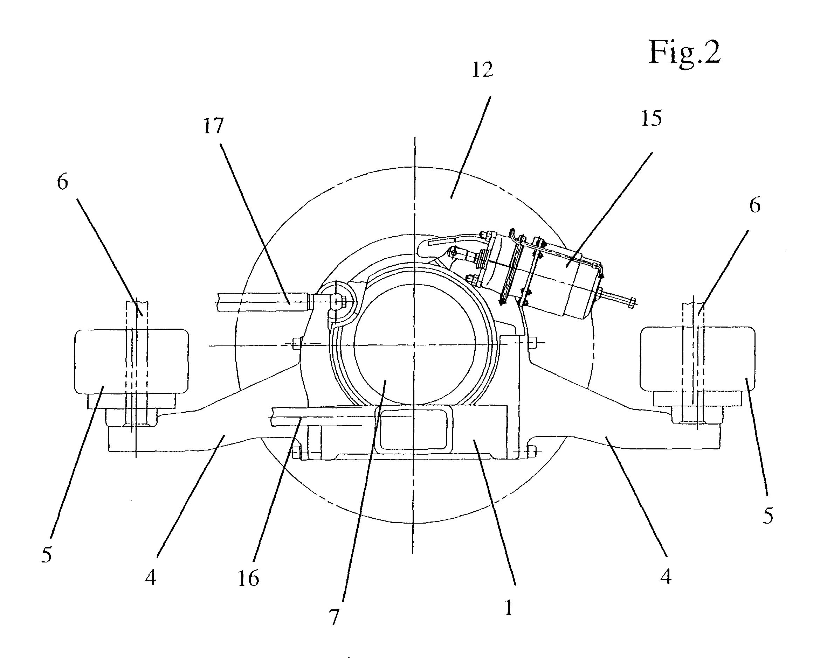

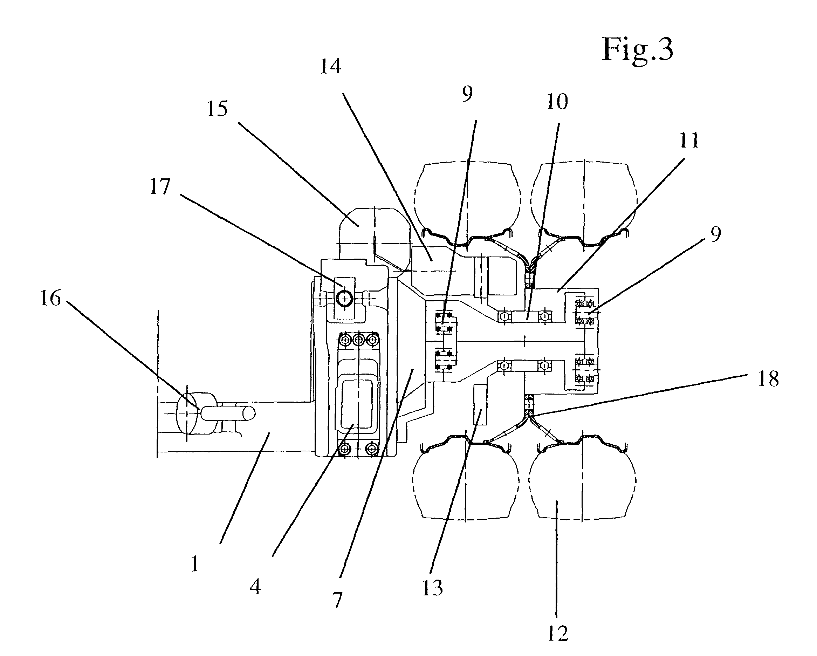

Die Fig. 1 bis Fig. 3 zeigen die Anordnung eines Einzelradantriebes nach dem Stand der Technik. Das in Fig. 1 bis 3 gezeigte beispielhafte Starrachssystem für elektrische Radnabenantriebe wird für Fahrzeuge mit einzeln, elektrisch angetriebenen Rädern 18 mit Zwillingsreifen eingesetzt. Der Starrachskörper 1 ist über die vier angeschraubten Federbalgträger 4 und die vier Luftfederbälge 5 am hier nicht gezeigten Fahrzeugchassis federnd aufgehängt. Die Seiten- und Längskräfte des Fahrzeugs, die auf das Achssystem wirken, werden über die Dreieckslenker 16 und die Längslenker 17 in das Chassis eingeleitet. Die Reaktionsmomente, resultierend aus dem Antriebs- und Bremsmoment, werden ebenfalls von den Dreieckslenkern 16 und den Längslenkern 17, die mit einem vertikalen Abstand am Achssystem montiert sind, in das Chassis eingeleitet. Die Schwingungsdämpfung der Achse erfolgt über die vier Stoßdämpfer 6, die auf den Federbalgträgern 4 montiert sind.

Die erforderliche gleichmäßige Belastung der Zwillingsreifen 12 beim Wanken des Fahrzeuges (Kurvenfahrt) wird durch den Starrachskörper 1 erreicht, d. h. dieser Teil des Achssystems nimmt die Biegemomente, resultierend aus den Seitenführungskräften, auf. Im Radkopf sind die restlichen, im folgenden beschriebenen Funktionen zusammengefaßt:
- Elektrisch antreiben,
- Drehmoment und Drehzahl wandeln,
- Radlagerung,
- Betriebs-, Feststell-, Not- und Hilfsbremse sowie
- Übertragung aller sich ergebender statischer und dynamischer Kräfte und Momente auf die Aufhängung bzw. die Achse.

Die Drehachse des einzigen Antriebsmotors 7 je Antriebsrad ist koaxial zur Raddrehachse angeordnet, wobei die Anpassung von Drehmoment und Drehzahl auf die erforderlichen Größen am Rad durch ein zweistufiges Planetengetriebe 9 geschieht. Die Radlagerung 10 liegt zwischen den beiden Planetengetriebestufen 9. Der Bremssattel 14 der Scheibenbremse 13 ist oberhalb der horizontalen Radmittellinie in der Nähe der 12 Uhr-Position angeordnet und wird durch den neben dem Rad liegenden Bremszylinder 15 betätigt.

Da die Spurweite bei gesetzlich festgeschriebener Fahrzeuggesamtbreite ebenfalls festliegt, ist die verbleibende Nutzbreite im interessierenden Bereich oberhalb der Achse 1 durch das Motorgehäuse und den Radbremszylinder 15 und einen zu beachtenden Sicherheitsabstand zur Fahrzeugkarosserie eingeschränkt.

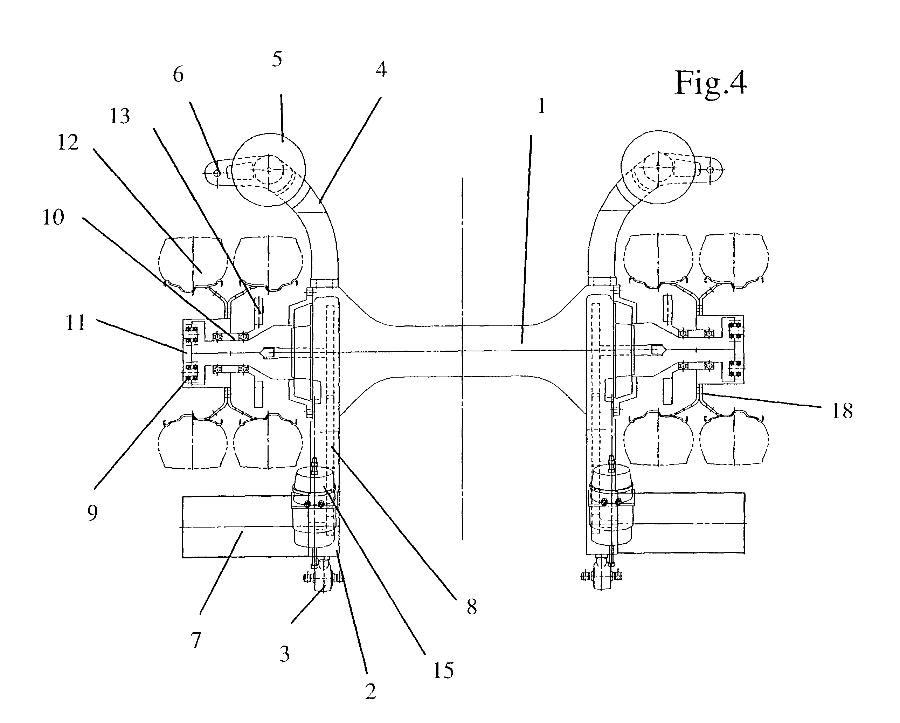

Die in Abb. 4 bis 6 gezeigte erfindungsgemäße Anordnung für ein Starrachssystem mit elektrischem Einzelradantrieb 7 paßt genau in den Bauraum wie das oben beschriebene System, allerdings mit einer wesentlich größeren Nutzbreite zwischen den Antriebseinheiten.

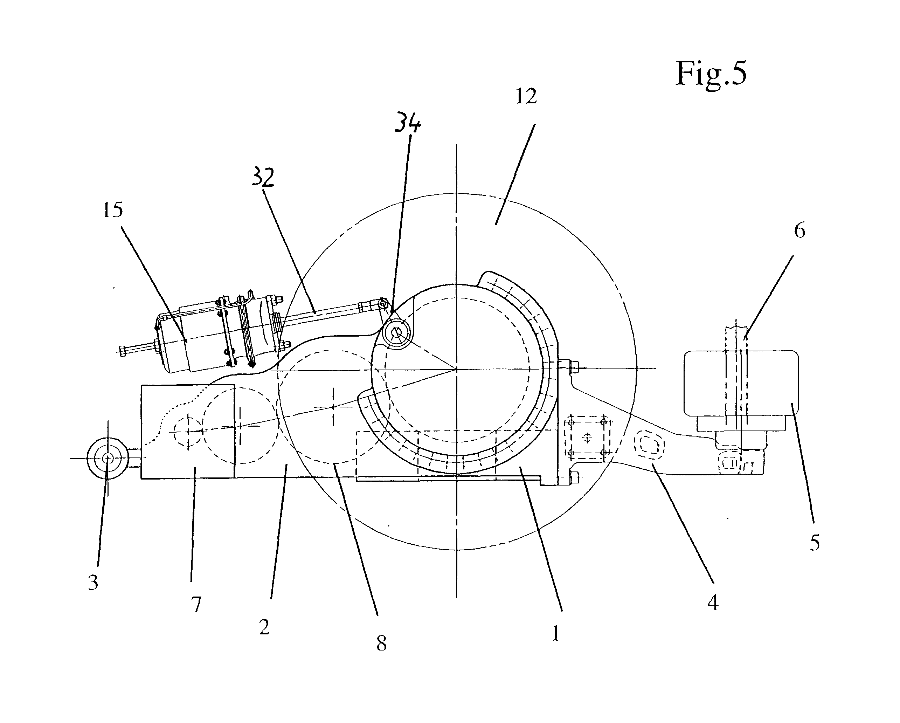

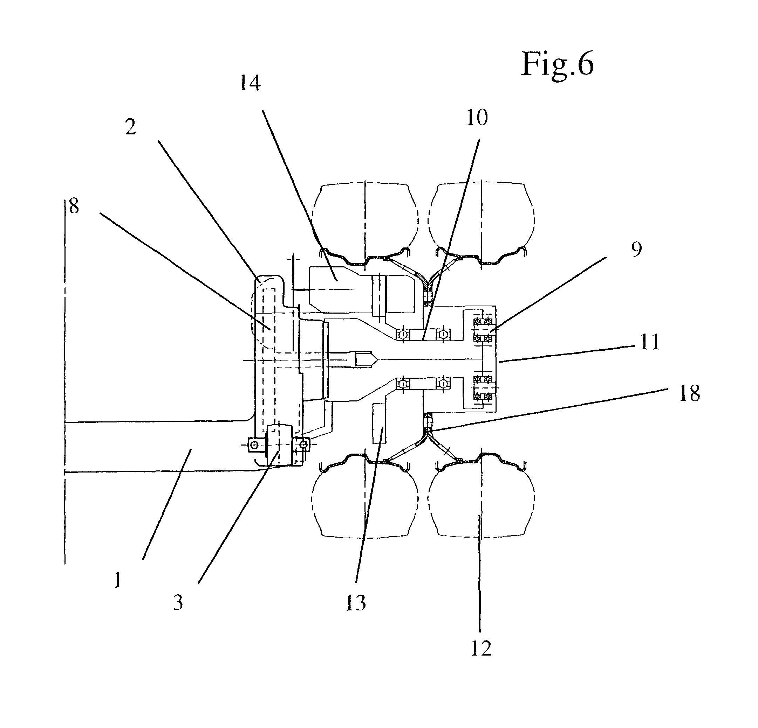

Die Fig. 4 zeigt eine Draufsicht, während Fig. 5 eine Seitenansicht und Fig. 6 einen Teil-Schnitt durch die Anordnung zeigt.

Die erfindungsgemäße Anordnung unterscheidet sich von bisherigen Anordnugen für einzeln angetriebene Räder 18 mit Zwillingsreifen 12 dadurch, daß die Elektromotoren 7 nicht koaxial zur Raddrehachse in den Radkopf, sondern vor dem Zwillingsreifen 12 anstelle des zweiten Balges 5 der Luftfederung, eingebaut sind. Zwei Verbundlenker 2 sind starr mit dem Starrachskörper 1 verbunden. Durch diese Anordnung ist es möglich, im Verbundlenker 2 mehrere Funktionen zu integrieren.

Der Starrachskörper 1 ist über die beiden Verbundlenker 2 und die Lenkerköpfe 3 am Fahrzeugchassis, um die Fahrzeugquerachse drehbar gelagert, angelenkt. Die Seitenund Längskräfte des Fahrzeugs, die auf das Achssystem wirken, werden über die als steife Getriebegehäuse ausgeführten Verbundlenker 2 und die Lenkerköpfe 3 in das Chassis eingeleitet. Die Reaktionsmomente, resultierend aus dem Antriebs- und Bremsmoment werden vor dem Rad über die Verbundlenker 2 und die Lenkerköpfe 3 und hinter dem Rad über die angeschraubten Federbalgträger 4 und die Luftfederbälge 5 in das nicht gezeigte Chassis eingeleitet. Gleichzeitig übernehmen die beiden Luftfederbälge 5 die Federungsfunktion für das gesamte Achssystem. Die Schwingungsdämpfung der Achse erfolgt über die beiden Stoßdämpfer 6, die auf den Federbalgträgern 4 montiert sind.

Die erforderliche gleichmäßige Belastung der Zwillingsreifen bei Kurvenfahrt des Fahrzeuges wird durch den Starrachskörper 1 erreicht, d.h. dieser Teil des Achssystems nimmt die Biegemomente resultierend aus den Seitenführungskräften auf.

Die Verbundlenker 2 übernehmen weiterhin die Funktion der Motorträger für die E-Motoren 7. Diese sind so nah wie möglich an der Drehachse der Lenkerköpfe 3 angeordnet, damit sich die dynamischen Massenkräfte, verursacht durch das Eigengewicht der Motoren 7, möglichst wenig auswirken. Die E-Motoren 7 treiben über je eine aus vier außenverzahnten Zahnrädern bestehende Stirnräderkette 8 auf je eine Planetengetriebestufe 9, die koaxial zur Raddrehachse angeordnet sind. Die Zahnräder der Stirnräderketten 8 sind in den als Getriebegehäuse ausgebildeten Verbundlenkern 2 untergebracht und auch in diesem gelagert.

Anstatt von je einem E-Motor 7 auf jeder Seite des Achssystems ist es auch möglich, mehr als einen Motor je Seite anzuflanschen und auf das Stirnradgetriebe wirken zu lassen. Die Motoren können luft-, wasser-, öl- oder aber auch durch andere Medien gekühlt werden.

Die Anpassung von Motormoment und -drehzahl an das erforderliche Raddrehmoment und die Raddrehzahl geschieht über die Stirnräderkette 8 und die Planetengetriebestufe 9. Zwischen Stirnrad- und Planetenstufe ist die Radlagerung 10 angeordnet, die die Radnabe 11 drehbar lagert. Die Zwillingsreifen 12 werden über handelsübliche Felgen an der Radnabe befestigt.

Die Bremse 13, die hier als pneumatisch betätigte Scheibenbremse ausgeführt ist, erfüllt die Betriebs-, Feststell-, Not-, und Hilfsbremsfunktion. Ebenfalls ist eine hydraulische Betätigung denkbar. Der Bremssattel 14 ist ganz konventionell oberhalb der horizontalen Radmittellinie in der Nähe der 12 Uhr-Position angeordnet. Die Bremsbetätigung 15 ist hier als kombinierter Membran- und Federspeicherzylinder ausgeführt, der tangential angeordnet ist und über ein Gestänge 32 und einen Hebel 34 die Bremse 13 betätigt.

Die Fig. 4 und Fig. 5 zeigen die Bremsbetätigung 15 in einer Anordnung außerhalb des Umfangs der Zwillingsreifen 12. Dadurch läßt sich die Bremsbetätigung 15 noch weiter zur Fahrzeugaußenseite hin verlegen und damit der nutzbare Bereich zwischen den Antriebsrädern weiter vergrößern. Dadurch, daß nicht der gesamte Durchmesser der Bremsbetätigung 15 am Zwillingsreifen 12 vorbeigeleitet werden muß, sondern nur das Gestänge 32, kann hier in vorteilhafter Weise zusätzlicher Raum geschaffen werden.

Die Anordnung der Bremsbetätigung außerhalb des Umfanges des Antriebsrades und die Betätigung der Bremse über ein entsprechendes Gestänge ist neben den hier gezeigten Motoranordnungen auch bei Motoranordnungen vorteilhaft, die koaxial zur Antriebsradachse vorgesehen sind.

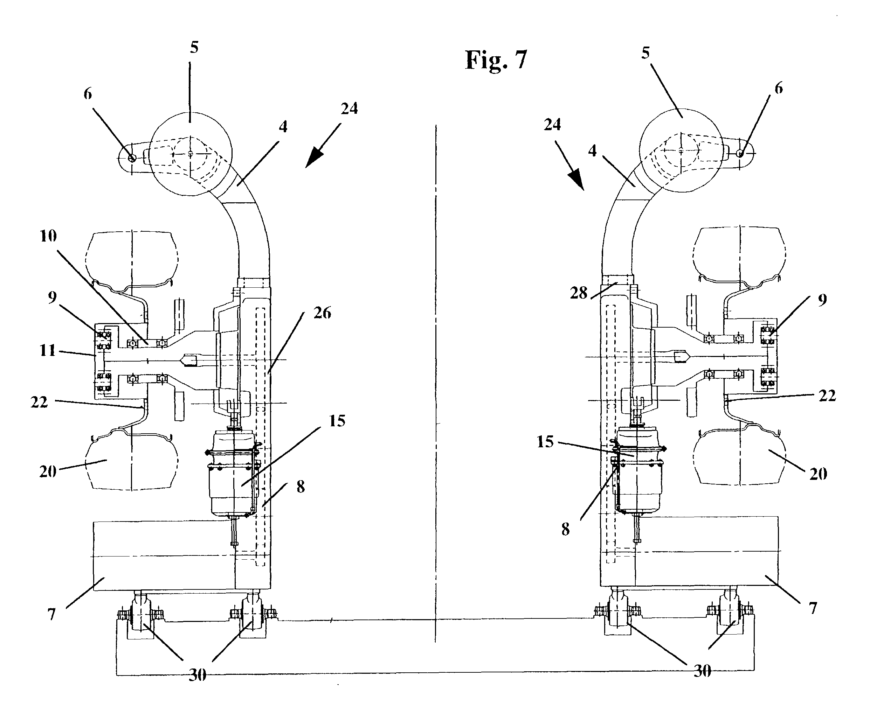

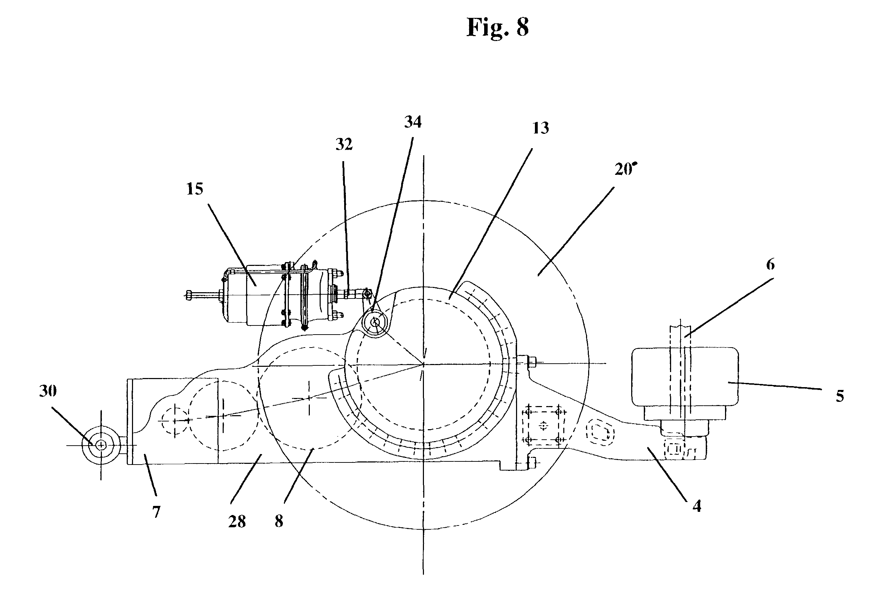

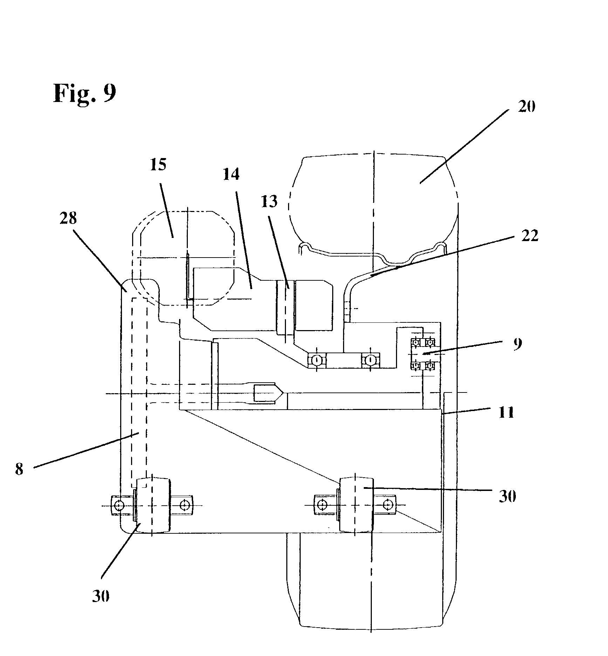

Die in Abb. 7 bis 9 gezeigte erfindungsgemäße Anordnung mit elektrischem Einzelradantrieb 7 paßt ebenfalls genau in den Bauraum wie das oben beschriebene System nach den Fig. 4 bis 6. Die Fig. 7 zeigt eine Draufsicht, während Fig. 8 eine Seitenansicht und Fig. 9 einen Teil-Schnitt durch die Anordnung zeigt.

Die erfindungsgemäße Anordnung unterscheidet sich von bisherigen Anordnungen für einzeln angetriebene Räder 18 mit Zwillingsreifen 12 unter anderem dadurch, daß das Antriebsrad 22 an einer Einzelradaufhängung 24 angeordnet ist. Dies macht einen Einzelreifen 20 erforderlich, um die Wankauswirkungen bei einer Einzelradaufhängung 24 ausgleichen zu können und nicht zu einer ungleichmäßigen Belastung von Zwillingsreifen an einem Rad zu kommen. Die Elektromotoren 7 sind wiederum nicht koaxial zur Raddrehachse in den Radkopf, sondern vor dem Einzelreifen 12 anstelle des zweiten Balges 5 der Luftfederung eingebaut. Je ein Verbundlenker 26 und 28 ist starr mit dem Antriebsrad 22 verbunden. Durch diese Anordnung ist es möglich, im Verbundlenker 26, 28 mehrere Funktionen zu integrieren.

Jedes Antriebsrad 22 ist je über einen die beiden Verbundlenker 26 und 28 und je über Lenkerköpfe 30 am Fahrzeugchassis, um die Fahrzeugquerachse drehbar gelagert, angelenkt. Die Seiten- und Längskräfte des Fahrzeugs, die auf das Achssystem wirken, werden über die als steife Getriebegehäuse ausgeführten Verbundlenker 26, 28 und die Lenkerköpfe 30 in das Chassis eingeleitet. Die Reaktionsmomente, resultierend aus dem Antriebs- und Bremsmoment, werden vor dem Rad 22 über die Verbundlenker 26, 28 und die Lenkerköpfe 30 und hinter dem Rad 22 über die angeschraubten Federbalgträger 4 und die Luftfederbälge 5 in das nicht gezeigte Chassis eingeleitet. Gleichzeitig übernehmen die beiden Luftfederbälge 5 die Federungsfunktion für das gesamte Achssystem. Die Schwingungsdämpfung der jeweiligen Einzelradaufhängung 24 erfolgt über die beiden Stoßdämpfer 6, die auf den Federbalgträgern 4 montiert sind.

Die Verbundlenker 26, 28 übernehmen weiterhin die Funktion der Motorträger für die E-Motoren 7. Diese sind so nah wie möglich an der Drehachse der Lenkerköpfe 30 angeordnet, damit sich die dynamischen Massenkräfte, verursacht durch das Eigengewicht der Motoren 7, möglichst wenig auswirken. Die E-Motoren 7 treiben über je eine aus vier außenverzahnten Zahnrädern bestehende Stirnräderkette 8 auf je eine Planetengetriebestufe 9, die koaxial zur Raddrehachse angeordnet sind. Die Zahnräder der Stirnräderketten 8 sind in den als Getriebegehäuse ausgebildeten Verbundlenkern 26, 28 untergebracht und auch in diesen gelagert.

Anstatt von je einem E-Motor 7 auf jeder Seite des Achssystems ist es auch möglich, mehr als einen Motor je Seite anzuflanschen und auf das Stirnradgetriebe wirken zu lassen. Die Motoren können luft-, wasser-, öl- oder aber auch durch andere Medien gekühlt werden.

Die Anpassung von Motormoment und -drehzahl an das erforderliche Raddrehmoment und die Raddrehzahl geschieht über die Stirnräderkette 8 und die Planetengetriebestufe 9. Zwischen Stirnrad- und Planetenstufe ist die Radlagerung 10 angeordnet, die die Radnabe 11 drehbar lagert. Die Einzelreifen 20 werden über handelsübliche Felgen an der Radnabe 11 befestigt.

Durch das Integralachssystem ergeben sich für Fahrzeuge mit elektrischem Einzelradantrieb die folgenden Vorteile gegenüber den bekannten Radnaben-Lösungen:

Es läßt sich die von den Fahrzeugherstellern geforderte Nutzbreite zwischen den Einzelradantriebseinheiten ohne großen Entwicklungsaufwand erreichen.

Das Integralachssystem paßt in den gleichen Bauraum wie das oben beschriebene herkömmliche Starrachssystem.

Handelsübliche kostengünstige Serienmotoren können in verschiedenen Leistungsklassen und von verschiedenen Herstellern verwendet werden.

Kostenintensive schrägverzahnte Hohlräder der ersten Planetenstufe können gegenüber der herkömmlichen elektrischen Radnabenlösung entfallen.

Serienmäßig verfügbare Radköpfe von bestehenden Radnabenantrieben können verwendet werden.

Längs- und Dreieckslenker können eingespart werden.

Durch die Anordnung der E-Motoren in der Nähe des Anlenkpunktes der Achse am Fahrzeugchassis werden die dynamisch wirkenden Massenkräfte reduziert.

Die Versorgungsleitungen (Stromkabel und Kühlmittelschläuche) werden während des Fahrbetriebs viel kleineren dynamischen Belastungen durch Knickung unterzogen als bei herkömmlichen Achssystemen für elektrische Radnabenantriebe, d. h. die Bruchgefahr der Leitungen ist wesentlich geringer.

### Bezugszeichen

- 1: Starrachskörper
- 2: Verbundlenker
- 3: Lenkerkopf
- 4: Federbalgträger
- 5: Luftfederbalg
- 6: Stoßdämpfer
- 7: Elektromotor
- 8: Stirnräderkette
- 9: Planetengetriebestufe
- 10: Radlagerung
- 11: Radnabe
- 12: Zwillingsreifen
- 13: Bremse
- 14: Bremssattel
- 15: Bremsbetätigung
- 16: Dreieckslenker
- 17: Längslenker
- 18: Antriebsrad
- 20: Einzelreifen
- 22: Antriebsrad
- 24: Einzelradaufhängung
- 26: Verbundlenker
- 28: Verbundlenker
- 30: Lenkerkopf
- 32: Gestänge
- 34: Hebel

## Patentansprüche

1. Elektrisch angetriebenes Fahrzeug mit einem Fahrzeugchassis und Fahrzeugachsen (1), die über Lenker (2, 16, 17) mit dem Chassis verbunden sind, mit jedem Antriebsrad (18) zugehörigem Einzelradantrieb (7) und mit jedem Antriebsrad (18) zugehöriger Bremsbetätigung (15), dadurch **gekennzeichnet**, daß der jeweilige Einzelradantrieb (7) in Fahrtrichtung des Fahrzeugs vor oder hinter dem Antriebsrad (18) angeordnet ist und mit dem Antriebsrad (18) über eine Stirnräderkette (8) verbunden ist, wobei das Gehäuse der Stirnräderkette (8) als ein Verbundlenker (2) ein Teil der Aufhängung (4, 5, 6) der das Antriebsrad (18) tragenden Achse (1) bildet.

2. Elektrisch angetriebenes Fahrzeug mit Einzelradantrieb (7) nach Anspruch 1, dadurch **gekennzeichnet,** daß der Einzelradantrieb (7) am Verbundlenker (2) befestigt ist.

3. Elektrisch angetriebenes Fahrzeug mit Einzelradantrieb (7) nach Anspruch 1 oder 2, dadurch **gekennzeichnet,** daß der Einzelradantrieb (7) zur Reduzierung dynamischer Massenkräfte in unmittelbarer Nähe einer Befestigung (3) des Lenkers (2) am Fahrzeugchassis zwischen der Befestigung (3) des Lenkers (2) und dem Antriebsrad (18) angeordnet ist.

4. Elektrisch angetriebenes Fahrzeug mit Einzelradantrieb (7) nach einem der Ansprüche 1 bis 3, dadurch **gekennzeichnet,** daß der Einzelradantrieb (7) am Verbundlenker (26, 28) einer Einzelradaufhängung (24) angeordnet ist und die Einzelradantriebe (7) mehrerer Antriebsräder (22) an einer Fahrzeugachse unabhängig voneinander angefedert werden können.

5. Elektrisch angetriebenes Fahrzeug mit Einzelradantrieb (7) nach einem der Ansprüche 1 bis 4, dadurch **gekennzeichnet,** daß die Bremsbetätigung (15) zur Vergrößerung der nutzbaren Breite zwischen den Antriebsrädern (18, 22) außerhalb des Umfanges der Antriebsräder (18, 22) angeordnet ist und über ein zwischen Bremsbetätigung (15) und Bremse (13) vorgesehenes Gestänge (32) die Bremse (13) betätigt.

6. Elektrisch angetriebenes Fahrzeug mit Einzelradantrieb (7) nach einem der Ansprüche 1 bis 5, dadurch **gekennzeichnet,** daß der Einzelradantrieb (7) aus mehreren kleineren Elektromotoren gebildet ist, die über ein Summenrad auf die Stirnräderkette (8) einwirken.

7. Elektrisch angetriebenes Fahrzeug mit Einzelradantrieb (7) nach einem der Ansprüche 1 bis 6, dadurch **gekennzeichnet,** daß die Stirnräderkette (8) über ein Planetengetriebe (9) auf das Antriebsrad (18) einwirkt.

8. Elektrisch angetriebenes Fahrzeug mit Einzelradantrieb (7) nach einem der Ansprüche 1 bis 7, dadurch **gekennzeichnet,** daß der Einzelradantrieb (7) luft-, wasser- oder ölgekühlt ist.

## Claims

1. Electrically driven vehicle with vehicle chassis and vehicle axles (1), which are linked to the chassis via suspension links (2, 16, 17), with each driven wheel (18) having its independent wheel drive (7) and each driven wheel (18) having its brake activation (15), **characterized** in that each independent wheel drive (7) is arranged in direction of travel of the vehicle either in front or after the driven wheel (18) and is linked to the driven wheel (18) by a spur gear set (8), with the housing of the spur gear set (8) functioning as a semi-independent suspension (2) and forming part ofthe suspension (4,5,6) of the axle (1) carrying the driven wheel (18).

2. Electrically driven vehicle with independent wheel drive (7) according to Claim 1, **characterized** in that the independent wheel drive (7) is mounted to the semi-independent suspension (2).

3. Electrically driven vehicle with independent wheel drive (7) according to Claim 1 or 2, **characterized** in that in order to reduce dynamic mass forces the independent wheel drive (7) is arranged in the immediate vicinity of a mounting (3) of the semi-independent suspension (2) on the vehicle chassis between the mounting (3) of the semi-independent suspension (2) and the driven wheel (18).

4. Electrically driven vehicle with independent wheel drive (7) according to one of the Claims 1 to 3, **characterized** in that the independent wheel drive (7) is arranged on the semi-independent suspension (26, 28) of an independent wheel suspension (24) and the independent wheel drives (7) of several driven wheels (22) can be independently spring-suspended on a single vehicle axle.

5. Electrically driven vehicle with independent wheel drive (7) according to one of the Claims 1 to 4, **characterized** in that in order to increase utilizable width the brake activation (15) is arranged between the driven wheels (18, 22) outside the circumference of the driven wheels (18, 22) and activates the brake (13) via a linkage (32) between the brake activation (15) and the brake (13).

6. Electrically driven vehicle with independent wheel drive (7) according to one of the Claims 1 to 5, **characterized** in that the independent wheel drive (7) consists of several small electric motors acting through a summarizing gear on the spur gear set (8).

7. Electrically driven vehicle with independent wheel drive (7) according to one of the Claims 1 to 6, **characterized** in that the spur gear set (8) acts on the driven wheel (18) through a planetary gear (9).

8. Electrically driven vehicle with independent wheel drive (7) according to one of the Claims 1 to 7, **characterized** in that the independent wheel drive (7) is either air-, water- or oil-cooled.

## Revendications

1. Véhicule à propulsion électrique comprenant un châssis de véhicule et des essieux de véhicule (1) qui sont reliés au châssis par des bras (2, 16, 17), un entraînement à roue indépendante (7) associé à chaque roue motrice (18) et une commande de frein (15) associée à chaque roue motrice (18), **caractérisé** en ce que l'entraînement à roue indépendante (7) est disposé en avant ou en arrière de la roue motrice (18) dans la direction de la marche du véhicule et est relié à la roue motrice (18) par un train d'engrenages droits (8), le carter du train d'engrenages droits (8) formant, en qualité de bras de liaison (2), une partie de la suspension (4, 5, 6) de l'essieu (1) qui porte la roue motrice (18).

2. Véhicule à propulsion électrique à entraînement à roue indépendante (7) selon la revendication 1, **caractérisé** en ce que l'entraînement à roue indépendante (7) est fixé au bras de liaison (2).

3. Véhicule à propulsion électrique à entraînement à roue indépendante (7) selon la revendication 1 ou 2, **caractérisé** en ce que, pour réduire les forces d'inertie dynamiques, l'entraînement à roue indépendante (7) est disposé à proximité immédiate d'une fixation (3) du bras (2) sur le châssis du véhicule, entre la fixation (3) du bras (2) et la roue motrice (18).

4. Véhicule à propulsion électrique à entraînement à roue indépendante (7) selon l'une des revendications 1 à 3, **caractérisé** en ce que l'entraînement à roue indépendante (7) est disposé sur le bras de liaison (26, 28) d'une suspension à roue indépendante (24) et les entraînements à roue indépendante (7) de plusieurs roues motrices (22) montées sur un même essieu du véhicule peuvent être suspendus indépendamment l'un de l'autre.

5. Véhicule à propulsion électrique à entraînement à roue indépendante (7) selon l'une des revendications 1 à 4, **caractérisé** en ce que, pour agrandir la largeur utilisable entre les roues motrices (18, 22), la commande de frein (15) est disposée en dehors de la périphérie des roues motrices (18, 22), et le frein (13) est actionné au moyen d'une tringlerie (32) prévue entre la commande de frein (15) et le frein (13).

6. Véhicule à propulsion électrique à entraînement à roue indépendante (7) selon l'une des revendications 1 à 5, **caractérisé** en ce que l'entraînement à roue indépendante (7) est formé de plusieurs petits moteurs électriques qui agissent sur une roue de somme prévue sur le train d'engrenages droits (8).

7. Véhicule à propulsion électrique à entraînement à roue indépendante (7) selon l'une des revendications 1 à 6, **caractérisé** en ce que le train d'engrenages droits (8) agit sur la roue motrice (18) par l'intermédiaire d'un engrenage planétaire (9).

8. Véhicule à propulsion électrique à entraînement à roue indépendante (7) selon l'une des revendications 1 à 7, **caractérisé** en ce que l'entraînement à roue indépendante (7) est refroidi par de l'air, de l'eau ou de l'huile.
